# EUROPÄISCHE PATENTSCHRIFT

(11) **EP 0 635 122 B1**
(45) Veröffentlichungstag und Bekanntmachung des Hinweises auf die Patenterteilung: **12.06.1996**
(21) Anmeldenummer: 93905206.4
(22) Anmeldetag: 20.03.1993
(51) Int. Cl.: G01L 23/22

(54) **VERFAHREN UND VORRICHTUNG ZUR ERKENNUNG DES KLOPFENS EINER BRENNKRAFTMASCHINE**
METHOD AND DEVICE FOR DETECTING KNOCKING IN AN INTERNAL-COMBUSTION ENGINE
PROCEDE ET DISPOSITIF PERMETTANT LA DETECTION DE CLIQUETIS DANS UN MOTEUR A COMBUSTION INTERNE

(30) Priorität: 07.04.1992 DE 4211645
(43) Veröffentlichungstag der Anmeldung: 25.01.1995
(73) Patentinhaber: ROBERT BOSCH GMBH, 70442 Stuttgart (DE)
(72) Erfinder: PHILIPP, Matthias, D-7000 Stuttgart 40 (DE)
(86) Internationale Anmeldenummer: DE9300254
(87) Internationale Veröffentlichungsnummer: WO9320424

(56) Entgegenhaltungen:
- WO-A-82/03685
- WO-A-90/15243

## Beschreibung

### Stand der Technik

Die Erfindung geht aus von einem Verfahren zur Erkennung des Klopfens einer Brennkraftmaschine nach der Gattung des Hauptanspruches sowie einer Vorrichtung zur Durchführung des Verfahrens.

Es ist bekannt, daß unter bestimmten Betriebsbedingungen einer Brennkraftmaschine das sogenannte Klopfen auftreten kann. Hierunter versteht man Stoßwellen des Kraftstoff-Luft-Gemisches, die sich unter anderem als tonfrequente Schwingungen des Motors bemerkbar machen. Da mit dem Klopfen in der Regel eine starke thermische Belastung der brennraumseitigen Wandung des Zylinders des Kolbens einhergeht, wobei Materialabtragungen auftreten können, ist man bestrebt, das Klopfen grundsätzlich zu vermeiden, da es bei längerem Auftreten zu einer Zerstörung der Brennkraftmaschine führen kann.

Da man jedoch andererseits bestrebt ist, den bestehenden Arbeitsbereich der Brennkraftmaschine, insbesondere bei Rennmotoren, möglichst weitgehend auszunutzen, besteht ein Bedürfnis, das Klopfen der Brennkraftmaschine möglichst frühzeitig und sicher zu erkennen. Hierbei besteht das meßtechnische Problem, aus den von einem Sensor erfaßten Schwingungen der Brennkraftmaschine das Klopfsignal zuverlässig und störungsfrei herauszulesen, um die Brennkraftmaschine in Abhängigkeit des Auftretens des Klopfens entsprechend regeln zu können.

Es ist allgemein bekannt, daß zur Klopferkennung ein dem Klopfvorgang zugeordnetes Signal mit einem Referenzsignal verglichen wird. Bei Überschreiten des Referenzsignals durch das Klopfsignal wird ein Klopferkennungssignal abgegeben. Hierbei ist nachteilig, daß das Referenzsignal sehr aufwendig zur Verfügung gestellt werden muß (WO-A1-82-3685).

### Vorteile der Erfindung

Das erfindungsgemäße Verfahren mit den im Hauptanspruch genannten Merkmalen hat demgegenüber den Vorteil, daß das gewonnene, von einem Klopfsensor gelieferte, Eingangssignal direkt einer an sich bekannten Klopfregelung zugeführt werden kann und dort mit tatsächlichen Ist-Werten der Brennkraftmaschine abgeglichen wird.
Hierzu werden die Signale des Klopfsensors digitalisiert, anschließend hochpaßgefiltert und dann aufintegriert und das so gewonnene Signal mit zwei vorgegebenen Grenzwerten verglichen, wobei auf einen Klopfvorgang erkannt wird, wenn beide Grenzwerte überschritten werden.

Auf diese Weise wird erreicht, daß das auszuwertende Klopfsignal mit höchster Sicherheit von anderen Nebensignalen unterschieden werden kann.

In vorteilhafter Ausgestaltung der Erfindung ist vorgesehen, daß für die Erzeugung der Signale des Klopfsensors der Druckverlauf des Zylinderinnendruckes einer Brennkraftmaschine zugrunde gelegt wird und dieses Signal mit einem als Sollwert vorgegebenen Absolutwert des Energieinhalts der Druckschwingungen und der Anzahl von Druckamplituden oberhalb eines Druckgrenzwertes verglichen wird.

In besonders vorteilhafter Weise wird die Vergleichsmessung innerhalb eines von der Stellung der Kurbelwelle abhängigen Meßfensters durchgeführt.

Die erfindungsgemäße Vorrichtung mit den in Anspruch 9 genannten Merkmalen hat den Vorteil, daß in einfacher Weise wenige an sich bekannte Bauelemente zu einer Klopferkennungsschaltung zusammengeschaltet sind, die eine zuverlässige Unterscheidung der Klopfsignale von weiteren Signalen gewährleistet und bei Erkennen von Klopfsignalen in Abhängigkeit der Ist-Stellung der für den Verbrennungsvorgang wesentlichen Stellungen der Kurbelund Nockenwelle eine Regelung der die Verbrennung beeinflussenden Größen, z.B. den Zündzeitpunkt, ermöglicht.

Weitere vorteilhafte Ausgestaltungen der Erfindung ergeben sich aus den Unteransprüchen.

### Zeichnung

Die Erfindung wird im folgenden anhand der Figuren näher erläutert. Es zeigen:
- Figur 1: ein Blockschaltbild der erfindungsgemäßen Erkennung des Klopfens einer Brennkraftmaschine,
- Figur 2: der typische Verlauf von Klopfschwingungen,
- Figur 3: der hochpaßgefilterte Verlauf von Klopfschwingungen und
- Figur 4: den hochpaßgefilterten und aufintegrierten Verlauf von Klopfschwingungen.

### Beschreibung von Ausführungsbeispielen

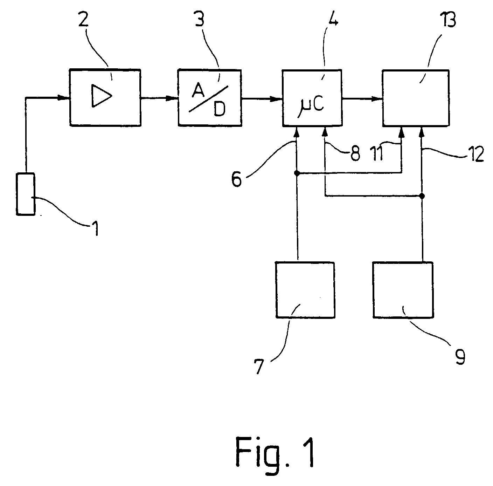

In dem in Figur 1 dargestellten Ausführungsbeispiel ist ein Klopfsensor 1, der als Druckaufnehmer für den Verbrennungsdruck im Zylinderinnenraum ausgebildet ist, über einen Ladungsverstärker 2 mit einem Analog-Digital-Wandler 3 verbunden. Der Analog-Digital-Wandler 3 ist an einen Signalprozessor 4 angeschlossen. Der Signalprozessor 4 weist weiterhin einen Eingang 6, der mit einem Stellungsgeber 7 für den Kurbelwinkel verbunden ist, und einen Eingang 8, der mit einem Stellungsgeber 9 für den Nockenwinkel verbunden ist, auf. Der Ausgang des Signalprozessors 4 ist mit einer Zündwinkelverstell- und Regeleinrichtung (13) für die Klopfregelung verbunden. Die Zündwinkelverstell- und Regeleinrichtung 13 ist über einen Eingang 11 mit dem Stellungsgeber 7 für den Kurbelwinkel und über einen Eingang 12 mit dem Stellungsgeber für den Nockenwinkel verbunden.

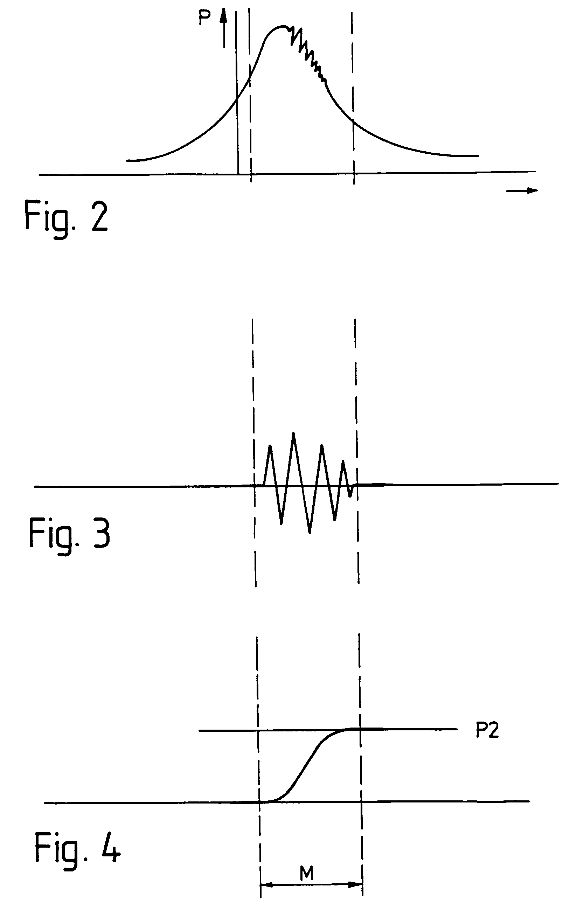

Die Wirkungsweise der in Figur 1 dargestellten Vorrichtung ist folgende und wird in Zusammenhang mit den in den Figuren 2 bis 4 dargestellten Kurvenverläufen erläutert.

Die klopfende Verbrennung einer Brennkraftmaschine weist einen ganz typischen Verlauf auf, wie er beispielsweise in Figur 2 dargestellt ist.
Der in Figur 2 dargestellte Signalverlauf, der durch den als Drucksensor für den Verbrennungsdruck im Zylinderinnenraum ausgebildeten Druckaufnehmer 1 gewonnen wird, weist im abfallenden Teil der Kurve Schwingungen auf, die möglicherweise auf eine klopfende Verbrennung schließen lassen.

Um die Auswertung zu vereinfachen, werden vorzugsweise unwichtige Informationen ausgeblendet, indem ein Meßfenster M gebildet wird. Nur während dieses Meßfensters M erfolgt eine Auswertung des Signalverlaufs. Das Meßfenster M wird vorzugsweise durch das Erreichen eines definierten Kurbelwellenwinkels gebildet. Dazu dient die über den Eingang 6 anliegende Information des Stellungsgebers 7 für den Kurbelwinkel. Ausgenutzt wird hierbei die Tatsache, daß eine klopfende Verbrennung nur in einem bestimmten Winkelbereich einer Kurbelwellenumdrehung auftreten kann. Außerhalb dieses Winkelbereiches ist eine klopfende Verbrennung nicht möglich, weil beispielsweise bei einer Viertakt-Brennkraftmaschine Ein- oder Auslaßventile geöffnet sind. Die über den Drucksensor 1 gewonnenen Signale werden dem Ladungsverstärker 2 zugeführt und dort verstärkt.

Das verstärkte Signal wird über den Analog-Digital-Wandler 3 digitalisiert und dem Signalprozessor 4 zugeführt.

Durch eine Hochpaßfilterung des Signals ergibt sich ein Signalverlauf, wie er beispielsweise in Figur 3 dargestellt ist. Da die Klopfschwingungen typischerweise sehr hochfrequent sind, werden andere Geräusche herausgefiltert und mit größtmöglicher Sicherheit nur die tatsächlich interessierenden Signale zur Auswertung gebracht.
Diese Schwingungen werden nun daraufhin untersucht, ob sie auf eine klopfende Verbrennung zurückzuführen sind. Dazu werden in einfacher Form zunächst die innerhalb des Meßfensters M liegenden Druck amplituden gezählt, die oberhalb einer definierten Druckschwelle P1 liegen.

Weiterhin werden die hochpaßgefilterten Drucksignale als Absolutwerte auf integriert. Als Ergebnis erhält man den Energieinhalt der hochfrequenten Druckschwingungen, das sogenannte Druckintegral. Der typische Verlauf eines Druckintegrals ist in Figur 4 gezeigt.

Der Energieinhalt der Druckschwingungen wird mit einem für die klopfende Verbrennung in Brennkraftmaschinen bekannten Grenzwert P2 verglichen.

Im Signalprozessor 4 erfolt nun eine dahin gehende Auswertung, daß wenn der Energieinhalt der Druckschwingungen den Grenzwert P2 überschreitet und gleichzeitig die Anzahl der oberhalb der Druckschwelle P1 liegenden Druckamplituden eine vorherbestimmte Anzahl übersteigt, auf eine klopfende Verbrennung erkannt wird.

Durch die gleichzeitige Erfassung und Auswertung von zwei verschiedenen, jedoch für eine klopfende Verbrennung in Brennkraftmaschinen wesentlichen Signalwerten, wird mit hoher Sicherheit zum richtigen Zeitpunkt auf eine klopfende Verbrennung erkannt.

Für den Fall, daß eine klopfende Verbrennung, vorliegt, wird diese Information einer an sich bekannten Zündwinkelverstell- und Regeleinrichtung 13 für eine Klopfregelung zugeführt, die ihrerseits auf die möglichen und vorgesehenen klopfmindernden Parameter in hier nicht näher beschriebener Weise Einfluß nimmt.

## Patentansprüche

1. Verfahren zur Erkennung des Klopfers einer Brennkraftmaschine, bei dem das Signal eines Klopfsensors digitalisiert und einem Signalprozessor zugeführt wird, dadurch gekennzeichnet, daß das Signal des Klopfsensors hochpaßgefiltert und dieses hochfrequente Signal mit einer ersten Druckschwelle (P1) in der Art verglichen wird, daß die Anzahl des Amplituden des hochfrequenten Signals, die die erste Druckschwelle (P1) überschreiten, gezählt werden und diese Anzahl mit einer vorbestimmten Anzhal verglichen wird und daß anschließend das hochpaßgefilterte Signal aufintegriert wird und das so entstandene Signal mit einem zweiten Vorgegebenen Grenzwert (P2) verglichen wird, wobei eine klopfende Verbrennung erkannt wird, wenn die Anzahl der Amplituden des hochfrequenten Signals, die die erste Druckschwelle überschreiten, größer ist als die vorbestimmte Anzahl und wenn von dem aufintegrierten Signal der zweite Grenzwert (P2) überschritten wird.

2. Verfahren nach Anspruch 1, dadurch gekennzeichnet, daß die Signale des Klopfsensors als Druckverlauf des Zylinderinnendrucks einer Brennkraftmaschine gewonnen werden.

3. Verfahren nach einem der vorhergehenden Ansprüche, dadurch gekennzeichnet, daß der zweite Grenzwert (P2) ein Absolutwert des Energieinhalts der Druckschwingungen ist.

4. Verfahren nach einem der vorhergehenden Ansprüche, dadurch gekennzeichnet, daß der Vergleichsvorgang innerhalb eines Meßfensters durchgeführt wird.

5. Verfahren nach Anspruch 4, dadurch gekennzeichnet, daß das Meßfenster ein Kurbelwinkelfenster ist.

6. Verfahren nach Anspruch 4 oder 5, dadurch gekennzeichnet, daß das Meßfenster ein Nockenwellenfenster ist.

7. Vorrichtung zur Erkennung des Klopfens einer Brennkraftmaschine mit einem Klopfsensor (1), der mit einem Analog Digitalwandler (3) verbunden ist und einem Stellungsgeber zur Einstellung eines Meßfensters, in welchem die Signale Klopfsensors auszuwerten sind, dadurch gekennzeichnet, daß der Ausgang des Analog-Digitalwandlers an einen Eingang eines Signalprozessors (4) angeschlossen ist, daß an einem weiteren Eingang des Signalprozessors (4) das Signal das Stellungsgeber angeschlossen ist und der Signalprozessor während des Meßfensters eine Hochpaßfilterung des Klopfsignals vornimmt und danach ein Vergleich des hochpaßgefilterten Signals mit einer ersten Druckswelle (P1) durchführt und die Anzahl der Amplituden des hochfrequenten Signals, die die erste Druckschwelle überschreiten, zählt und diese mit einer vorbestimmten Anzahl vergleicht, daß der Signalprozessor anschließend das hochpaßgefilterte Signal integriert und das Integral mit einem zweiten Grenzwert (P2) vergleicht und daß der Signalprozessor Klopfen erkennt, wenn die Anzahl der Amplituden des hochfrequenten Signals, die die erste Druckschwelle (P1) überschreiten größer ist als die vorbestimmte Anzahl und wenn das integrierte Signal den zweiten Grenzwert (P2) überschreitet.

8. Vorrichtung nach Anspruch 7, dadurch gekennzeichnet, daß der Klopfsensor (1) ein Druckaufnehmer ist.

9. Vorrichtung nach Anspruch 7, dadurch gekennzeichnet, daß der Stellungsgeber (7) mit der Kurbelwelle verbunden ist.

10. Vorrichtung nach Anspruch 7 oder 9, dadurch gekennzeichnet, daß der Stellungsgeber (9) mit der Nockenwelle verbunden ist.

## Claims

1. Method for recognizing the knocking of an internal-combustion engine, in which the signal of a knock sensor is digitized and fed to a signal processor, characterized in that the signal of the knock sensor is high-pass-filtered, and this high-frequency signal is compared with a first pressure threshold (P1) in such a way that the number of amplitudes of the high-frequency signal which exceed the first pressure threshold (P1) is counted, and this number is compared with a predetermined number, and in that the high-pass-filtered signal is subsequently integrated on and the signal thus obtained is compared with a second predetermined limit value (P2), knocking combustion being recognized when the number of amplitudes of the high-frequency signal which exceed the first pressure threshold is higher than the predetermined number, and when the second limit value (P2) is exceeded by the integrated-on signal.

2. Method according to Claim 1, characterized in that the signals of the knock sensor are obtained as a pressure trend of the cylinder internal pressure of an internal-combustion engine.

3. Method according to one of the preceding claims, characterized in that the second limit value (P2) is an absolute value of the energy content of the pressure vibrations.

4. Method according to one of the preceding claims, characterized in that the comparison operation is carried out within a measurement window.

5. Method according to Claim 4, characterized in that the measurement window is a crank-angle window.

6. Method according to Claim 4 or 5, characterized in that the measurement window is a camshaft window.

7. Device for recognizing the knocking of an internal-combustion engine, with a knock sensor (1) which is connected to an analog/digital converter (3), and with a position transmitter for setting a measurement window, in which the signals of the knock sensor are to be evaluated, characterized in that the output of the analog/digital converter is connected to one input of a signal processor (4), in that the signal of the position transmitter is connected to a further input of the signal processor (4), and the signal processor executes a highpass filtration of the knock signal during the measurement window and thereafter carries out a comparison of the high-pass-filtered signal with a first pressure threshold (P1), and counts the number of amplitudes of the high-frequency signal which exceed the first pressure threshold and compares this with a predetermined number, in that the signal processor subsequently integrates the high-pass-filtered signal and compares the integral with a second limit value (P2), and in that the signal processor recognizes knocking when the number of amplitudes of the high-frequency signal which exceed the first pressure threshold (P1) is higher than the predetermined number, and when the integrated signal exceeds the second limit value (P2).

8. Device according to Claim 7, characterized in that the knock sensor (1) is a pressure transducer.

9. Device according to Claim 7, characterized in that the position transmitter (7) is connected to the crankshaft.

10. Device according to Claim 7 or 9, characterized in that the position transmitter (9) is connected to the camshaft.

## Revendications

1. Procédé de détection du cliquetis d'un moteur à combustion interne selon lequel on numérise le signal d'un capteur de cliquetis et on l'applique à un processeur de signal, caractérisé en ce qu'on fait passer le signal du capteur de cliquetis dans un filtre passe-haut et on compare ce signal à haute fréquence à un premier seuil de pression (P1) en comptant le nombre des amplitudes du signal à haute fréquence dépassant le premier seuil de pression (P1) et en comparant ce nombre à un nombre prédéterminé, puis on intègre le signal fourni par le signal passe haut et le signal ainsi obtenu est comparé à une seconde valeur limite prédéterminée (P2), une combustion avec cliquetis étant reconnue si le nombre des amplitudes du signal à haute fréquence dépassant le premier seuil de pression est supérieur au nombre prédéterminé et est dépassé par le signal intégré du second seuil (P2).

2. Procédé selon la revendication 1, caractérisé en ce que les signaux du capteur de cliquetis sont obtenus à partir de la courbe de pression intérieure du cylindre d'un moteur à combustion interne.

3. Procédé selon l'une des revendications précédentes, caractérisé en ce que la seconde valeur de seuil (P2) est une valeur absolue de l'énergie contenue dans les oscillations de pression.

4. Procédé selon l'une des revendications précédentes, caractérisé en ce que la comparaison se fait à l'intérieur d'une fenêtre de mesure.

5. Procédé selon la revendication 4, caractérisé en ce que la fenêtre de mesure est une fenêtre d'angle de vilebrequin.

6. Procédé selon la revendication 4 ou 5, caractérisé en ce que la fenêtre de mesure est une fenêtre d'arbre à cames.

7. Dispositif pour détecter le cliquetis d'un moteur à combustion interne avec un capteur de cliquetis (1) relié à un convertisseur analogique/numérique (3) et un capteur de position pour régler une fenêtre de mesure dans laquelle on exploite les signaux du capteur de cliquetis, caractérisé en ce que la sortie du convertisseur analogique/numérique est appliquée à une entrée d'un processeur de signal (4) dont une autre entrée reçoit le signal d'un capteur de position et le processeur de signal, pendant la fenêtre de mesure, fait un filtrage passe-haut du signal de cliquetis, puis une comparaison entre le premier signal passe-haut et un premier seuil de pression (P1) et compte les nombres des amplitudes du signal haute fréquence dépassant le premier seuil de pression et compare ce nombre à un nombre prédéterminé, le processeur de signal intègre alors le signal filtré par un filtre passe-haut et compare l'intégrale à une seconde valeur à seuil (P2) et en ce que le processeur de signal permet de détecter le cliquetis si le nombre des amplitudes du signal haute fréquence dépassant le premier seuil de pression (P1) est supérieur au nombre prédéterminé et si le signal intégré dépasse le second seuil (P2).

8. Dispositif selon la revendication 7, caractérisé en ce que le capteur de cliquetis (1) est un détecteur de pression .

9. Dispositif selon la revendication 7, caractérisé en ce que le capteur de position (7) est relié au vilebrequin.

10. Dispositif selon la revendication 7 ou 9, caractérisé en ce que le capteur de position (9) est relié à un arbre à came.
